# EUROPÄISCHE PATENTSCHRIFT

(11) **EP 2 397 392 B1**
(45) Veröffentlichungstag und Bekanntmachung des Hinweises auf die Patenterteilung: **18.02.2015**
(21) Anmeldenummer: 11002824.8
(22) Anmeldetag: 05.04.2011
(51) Int. Cl.: B62D 25/16

(54) **Kotflügel für ein Nutzfahrzeug**
Wing for a commercial vehicle
Aile pour un véhicule utilitaire

(30) Priorität: 19.06.2010 DE 102010024409
(43) Veröffentlichungstag der Anmeldung: 21.12.2011
(73) Patentinhaber: MAN Truck & Bus AG, 80995 München (DE)
(72) Erfinder: Kraus, Alfons, 83624 Otterfing (DE); Menrath, Petra, 85757 Karlsfeld (DE); Albertshofer, Günter, 81929 München (DE)

(56) Entgegenhaltungen:
- WO-A1-03/018377
- DE-A1- 4 309 098
- DE-A1- 10 108 713
- DE-A1- 10 209 162
- DE-A1- 19 603 657
- DE-A1-102008 019 166
- DE-U- 7 009 468
- US-A- 5 381 680

## Beschreibung

Die Erfindung betrifft einen Kotflügel für ein Nutzfahrzeug, der mit einer, der Reifenform angepassten Wölbung, in nach unten zur Fahrbahn gerichteten Schenkeln endet sowie ein Nutzfahrzeug, das mit wenigstens einem erfindungsgemäßen Kotflügel ausgerüstet ist.

Aus der DE 101 08 713 A1 ist ein Lastkraftwagen mit Kotflügeln bekannt, die einen Stauraum zur Verfügung stellen. Zum Stand der Technik wird ferner auf die DE 70 09 468 U und die DE 43 09 098 A1 verwiesen.

In der gattungsgemäßen DE 10 2008 019 166 A1 wird ein Kotflügel zur Abdeckung wenigstens eines Rades eines Lastkraftwagens offenbart, der wenigstens ein Kotflügelteil aufweist, der in einem Abstand zu einem Außenumfang des Fahrzeugrads anzuordnen ist. Dem Kotflügel ist dabei wenigstens ein Behälter zugeordnet, der insbesondere ein Druckluftbehälter ist. Das Kotflügelteil ist als Strang-Press-Profil mit wenigstens einer Hohlkammer ausgebildet, in welche der zugeordnete Behälter, insbesondere der Druckluftbehälter integriert ist. Zusätzlich zeigt die Praxis, dass insbesondere Unterlegkeile je nach Fahrzeugtyp an verschiedenen Anbauorten am Fahrzeug angebracht sind. Wünschenswert wäre es deshalb, einen Ort an einem Nutzfahrzeug zu schaffen, an dem ein Unterlegkeil unabhängig von der Größe und der Ausstattung des Nutzfahrzeugs standardmäßig angeordnet sein kann.

Diese Aufgabe wird erfindungsgemäß dadurch gelöst, dass an der Außenseite der Wölbung des Kotflügels ein zur Aufnahme eines Unterlegkeils bestimmter Stauraum mit einer Öffnung angeordnet ist. Der Kotflügel ist dabei erfindungsgemäß an jedem Rad einer gelenkten oder ungelenkten Fahrzeugachse des Nutzfahrzeugs angeordnet. Es können z. B. im Fall einer Zwillingsbereifung mehrere Kotflügel nebeneinander angeordnet und miteinander verbunden sein. Der Kotflügel kann inklusive seiner nach unten zur Fahrbahn gerichteten Schenkeln einteilig ausgebildet sein oder einen zentralen Teil aufweisen, an dem vorne und hinten je ein Schenkel lösbar angeordnet ist. Der Kotflügel ist der Radlauffläche und dem Durchmesser des Rades angepasst. Der rückseitige Schenkel kann Teile der Beleuchtungseinrichtung oder eine Kennzeichentafel aufnehmen. Der Kotflügel ist rahmenfest oder mittelbar über einen Halter am Rahmen befestigt. Vorstellbar ist jedoch auch, den Kotflügel am Radträger anzuordnen. Im Sinn der vorliegenden Erfindung überdeckt der Kotflügel zumindest bereichsweise die Lauffläche des Rades und bedeckt in Fahrtrichtung gesehen zumindest auf einer Seite bereichsweise auch die Seitenfläche des Rades. Der Stauraum ist außer für die Aufnahme eines Unterlegkeils z. B. auch für die Aufnahme von Schneeketten oder als Werkzeugfach nutzbar. Der Stauraum weist eine Öffnung auf, die in Fahrtrichtung gesehen nach oben oder zur Außenseite des Fahrzeugs gerichtet ist, so dass der Unterlegkeil entweder von oben oder seitlich in den erfindungsgemäßen Stauraum einzuführen ist. Der Stauraum kann z. B. an einem Omnibus von einem Teil der Karosserie verdeckt sein und erst nach Öffnung einer Karosserieklappe zugänglich sein. Bei Nutzfahrzeugen mit mehreren hintereinander angeordneten Achsen können mehrere mit wenigstens einem Stauraum ausgerüstete Achsen hintereinander positioniert sein.

Eine andere Ausführungsform der Erfindung sieht vor, dass der Innenraum des Stauraums an den aufzunehmenden Unterlegkeil angepasst ist. Der erfindungsgemäße Unterlegkeil weist von der Seite gesehen eine im Wesentlichen ebene Grundfläche auf, mit der er im Einsatzfall auf dem Boden zu liegen kommt sowie eine konvexe und dem Außenumfang des Rades angepasste Rad-Stützfläche auf, gegen die sich das Rad im Einsatzfall anlehnt und die in einem spitzen Winkel zur Bodenseite verläuft. Von der Seite gesehen verbindet ein Rücken des Unterlegkeils die Bodenseite des Keils mit der Rad-Stützseite. Der Stauraum des Kotflügels ist in Form und Umfang sowie in Bezug auf die Neigung der Seitenfläche so ausgebildet, dass Unterlegkeile unterschiedlicher Größe im Stauraum aufgenommen werden können. Der Stauraum verfügt über Sicherungsmaßnahmen, mit denen der Unterlegkeil verliersicher gehalten wird. Zusätzlich weist der Stauraum Dämpfungselemente auf, die ein Klappern des Unterlegkeils im Stauraum verhindern.

Eine weitere Ausführungsform der Erfindung sieht vor, dass der Stauraum einen anscharnierten Verschlussdeckel aufweist. Der Verschlussdeckel kann die Stauraumöffnung zu einem Teil oder auch ganz bedecken. Eine ganzflächige Bedeckung der Öffnung des Stauraums verhindert das Eindringen von Feuchtigkeit in den Stauraum, wodurch einer Korrosion des Stauraums oder des Unterlegkeils entgegengewirkt wird. Zusätzlich können am Stauraum zur Fahrbahn gerichtete Öffnungen vorgesehen sein, durch die eingedrungenes Spritzwasser ablaufen kann.

Eine weitere Ausführungsform der Erfindung sieht vor, dass eine Wandung des Stauraums in den Kotflügel integriert ist. Je nachdem, ob der Kotflügel aus Metall oder aus Kunststoff gefertigt ist, kann die Wandung des Stauraums an den Kotflügel angegossen oder angeformt sein. Kotflügel und Stauraum können auch als einteiliges Formteil ausgebildet sein. Weiterhin ist denkbar, dass der Stauraum aus einem, an der Außenwand des Kotflügels zu befestigenden Behälter besteht. Der Behälter kann an den Kotflügel angeschraubt, angenietet oder auch angeschweißt werden. Im Weiteren wird die Außenwand des Kotflügels auch als seine Außenseite bezeichnet.

In einer weiteren Ausführungsform der Erfindung ist vorgesehen, dass der Stauraum eine der Wölbung des Kotflügels angepasste Rückwand aufweist. Die Rückwand ist in ihrer Breite und in ihrer Krümmung der Wölbung des Kotflügels angepasst. Dies gilt für Fahrzeuge mit Einzel- oder mit Zwillingsbereifung.

Eine zusätzliche Ausführungsform der Erfindung sieht vor, dass der Stauraum an der Vorder- und/oder Rückseite des Kotflügels angeordnet ist. Je nachdem, ob die Vorder- oder die Rückseite des Rades gegen Wegrollen zu sichern ist, steht dem Fahrer somit an jeder Seite des Rades je ein Unterlegkeil zur Verfügung. Die Vorder- bzw. die Rückseite des Kotflügels wird im Folgenden vorderer Schenkel bzw. hinterer Schenkel genannt.

Zusätzlich ist vorgesehen, dass wenigstens eine der Wandungen des Stauraums eine Rippe zum Eingriff in eine dazu kongruente Nut in einer Seite des Unterlegkeils aufweist. Die Nut kann dabei in der Bodenfläche, der Rad-Stützfläche oder im Rücken des Unterlegkeils angeordnet sein. Nut und Rippe können in Laufrichtung des Rades oder quer zur Lauffläche angeordnet sein. An der Nut, der Rippe oder einer beliebigen Stelle des Stauraums kann eine Sicherungseinrichtung vorgesehen sein, die den Unterlegkeil vor Herausfallen aus dem Staufach schützt.

Erfindungsgemäß ist vorgesehen, dass der Stauraum bei zwei hintereinander angeordneten Kotflügeln in dem Zwischenraum zwischen den einander entgegen gerichteten Wölbungen der beiden Kotflügel angeordnet ist. Die Stauräume können Wand an Wand aneinander liegen oder gemeinsame Wandungen aufweisen. Die beiden Stauräume der hintereinander angeordneten Kotflügel können über eine Nut-Feder-Verbindung gegeneinander gesichert werden.

Weiterhin ist vorgesehen, dass ein Nutzfahrzeug an seinen Rädern Kotflügel entsprechend den Ansprüchen 1 bis 8 aufweist.

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigen:
- Fig. 1: zwei Nutzfahrzeugachsen mit gehalterten Unterlegkeilen,
- Fig. 2: eine Darstellung entsprechend Fig. 1 mit verliersicher angeordneten Unterlegkeilen,
- Fig. 3: in Seitenansicht zwei Unterlegkeile,
- Fig. 4: eine Darstellung entsprechend Fig. 1 mit erfindungsgemäßen Behältern und
- Fig. 5: eine Darstellung entsprechend Fig. 1 mit gehalterten Unterlegkeilen.

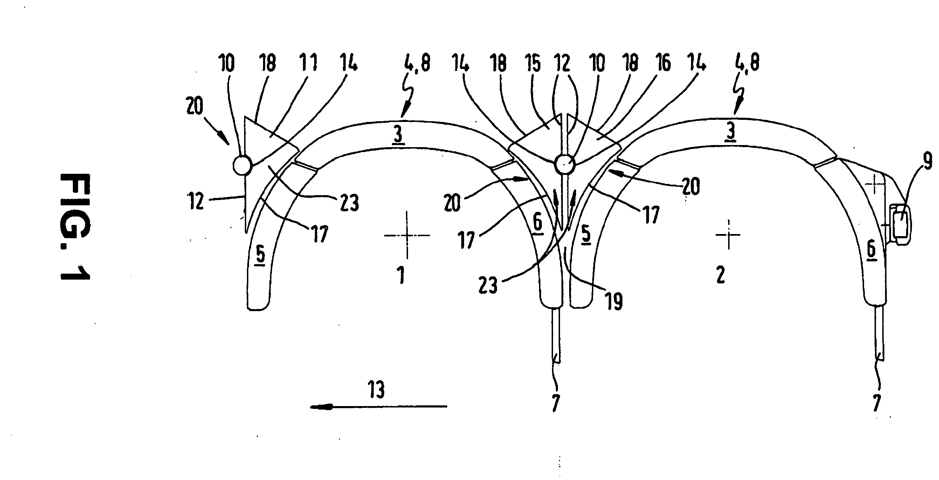

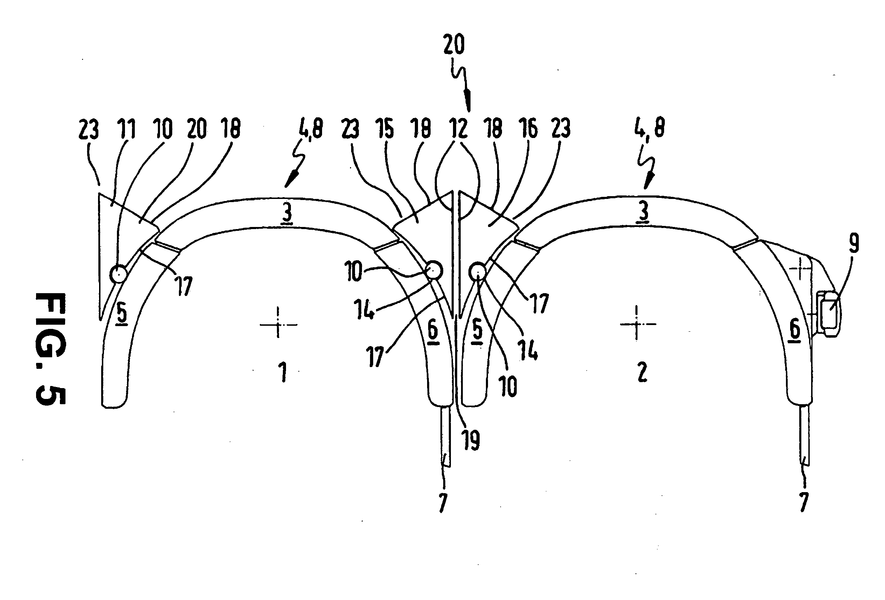

Figur 1 und 2 sowie die Figuren 4 und 5 zeigen jeweils in Seitenansicht die aneinander angrenzenden Kotflügel 4 einer Achse 1 sowie einer weiteren Achse 2. Die Achse 1; 2 ist als Vor- oder Nachlaufachse, oder als zusätzliche Triebachse ausgebildet. Die Kotflügel 4 weisen einen zentralen Teil 3 sowie einen vorderen Schenkel 5 und einen hinteren Schenkel 6 auf. An den hinteren Schenkeln 6 sind Spritzlappen 7 vorgesehen. Oberhalb der Spritzlappen 7 sind an der Außenseite 8 der Kotflügel 4 Beleuchtungseinrichtungen 9 dargestellt. In den genannten Figuren stoßen jeweils der hintere Schenkel 6 der Achse 1 an den vorderen Schenkel 5 der weiteren Achse 2 an. In den Figuren 1 und 5 sind die Kotflügel 4 über die Halterungen 10 mittelbar am Rahmen (nicht gezeigt) befestigt.

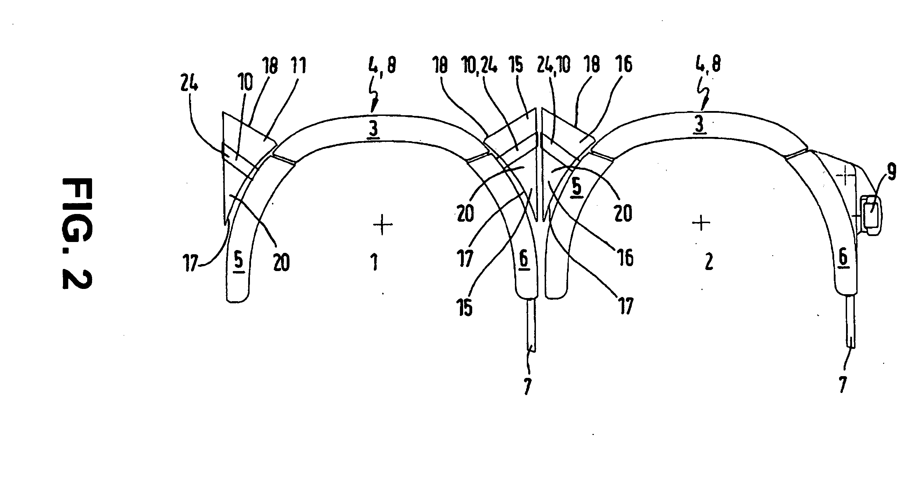

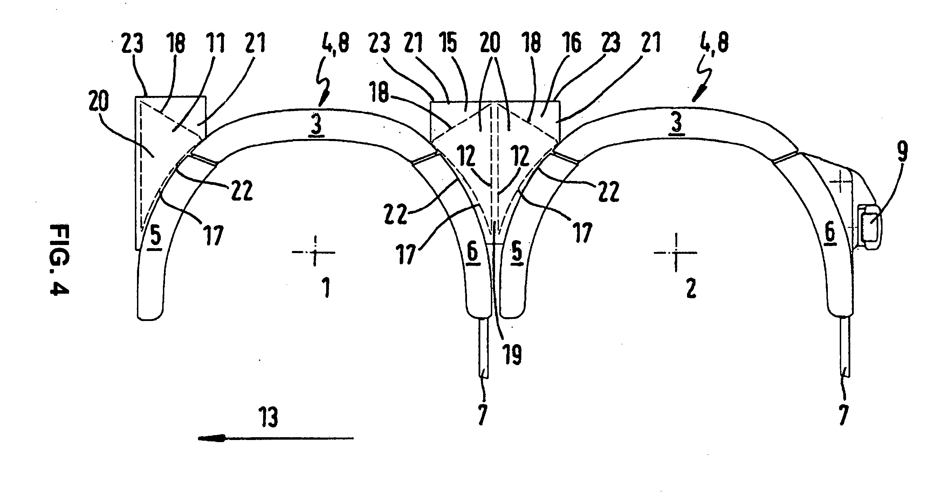

In Fig. 1 ist ein Unterlegkeil 11 am vorderen Schenkel 5 der Achse 1 an einer Halterung 10 befestigt. Der Unterlegkeil 11 weist dabei mit seiner Bodenfläche 12 in Fahrtrichtung 13 nach vorne. In die Bodenfläche 12 ist eine Aussparung 14 eingebracht, die quer zur Fahrtrichtung 13 verläuft und die zumindest bereichsweise die Halterung 10 aufnimmt. Zur verliersicheren Befestigung ist der Unterlegkeil 11 in Fig. 1 seitlich zur Fahrtrichtung 13 zwischen der Halterung 10 und dem vorderen Schenkel 5 eingeklemmt. Beispielgebend für die in den Fig. 1-5 dargestellten Unterlegkeile 11; 15; 16 lehnt sich der Keil 11 in Fig. 1 mit seiner Rad-Stützfläche 17 an die konvex-gewölbte Außenseite 8 des Schenkels 5; 6 an. In etwa rechtwinklig zur Rad-Stützfläche 17 weist der Rücken 18 des Unterlegkeils 11; 15; 16 nach oben. In den Fig. 1 und 5 greifen Halterungen 10 in die Bodenflächen 12 bzw. in die Rad-Stützflächen 17 hinein. Im Zentrum 19 zwischen dem hinteren Schenkel 6 der Achse 1 und dem vorderen Schenkel 5 der weiteren Achse 2 sind in den Fig. 1 und 5 je zwei Unterlegkeile 15 und 16 mit ihren Bodenflächen 12 aneinander anliegend dargstellt. In Fig. 1 ist eine zentrale Halterung 10 vorgesehen, an die sich die beiden Unterlegkeile 15 und 16 mit den Aussparungen 14 der Bodenflächen 12 anlehnen. Die beiden Unterlegkeile 15; 16 stützen sich mit ihren jeweiligen Rad-Stützflächen 17 an dem vorderen Schenkel 5 bzw. dem hinteren Schenkel 6 ab. Demgegenüber sind in Fig. 5 im Zentrum 19 zwei Halterungen 10 vorgesehen, an denen die Unterlegkeile 15 und 16 mit den Aussparungen 14 ihrer Rad-Stützflächen 17 anliegen. An den, den Rücken 18 zugewandten Enden der Rad-Stützflächen 17 liegen die Unterlegkeile 15 und 16 darüber hinaus an den Außenseiten 8 der Kotflügel 4 an. In gleicher Weise ist in Fig. 5 der Unterlegkeil 11 am vorderen Schenkel 5 des Kotflügels 4 der Achse 1 angeordnet. In den Fig. 1 und 5 werden die Stauräume 20 aus den Außenseiten 8 der Kotflügel 4 und den Halterungen 10 gebildet. Demgegenüber sind in Fig. 4 Behälter 21 dargestellt, in die entsprechend der gestrichelten Linien die Unterlegkeile 11; 15; 16 eingeführt sind. Die Behälter 21 liegen in Fig. 4 mit ihren Wölbungen 22 an den Außenseiten 8 der Kotflügel 4 an. Die in den Behältern 21 gestrichelt dargestellten Unterlegkeile 11; 15; 16 sind mit ihren Rad-Stützflächen 17 jeweils den Außenseiten 8 der Kotflügel 4 zugewandt. Im Zentrum 19 liegen die Unterlegkeile 15 und 16 mit ihren Bodenflächen 12 Seite and Seite einander gegenüber. Die in Fig. 4 dargestellten Behälter 21 sind entweder rahmenfest angebracht oder an den Kotflügeln 4 befestigt. Zur Beladung mit den Unterlegkeilen 11; 15; 16 weisen die Behälter 21 der Stauräume 20 in Fig. 4 nach oben gerichtete Öffnungen 23 auf. Aufgrund der seitlich zur Fahrtrichtung 13 verlaufenden Halterungen 10 verfügen die Stauräume 20 in den Fig. 1 und 5 über seitlich zugängliche Öffnungen 23. Fig. 2 und Fig. 4 weisen in den Stauräumen 20 jeweils Behälter 21 auf, die in Fig. 2 jedoch Haltebügel 24 umfassen. Entsprechend der Anordnung der Unterlegkeile 11; 15; 16 sind die Haltebügel 24 von oben zu beladen. Die Haltebügel 24 ragen in etwa rechtwinklig zu den Schenkeln 5; 6 der Außenseiten 8 der Kotflügel 4 ab. In den Fig. 1 und 2 sowie 4 und 5 sind Sicherungseinrichtungen 25 zur lösbaren Befestigung der Unterlegkeile 11; 15; 16 in den Stauräumen 20 vorgesehen.

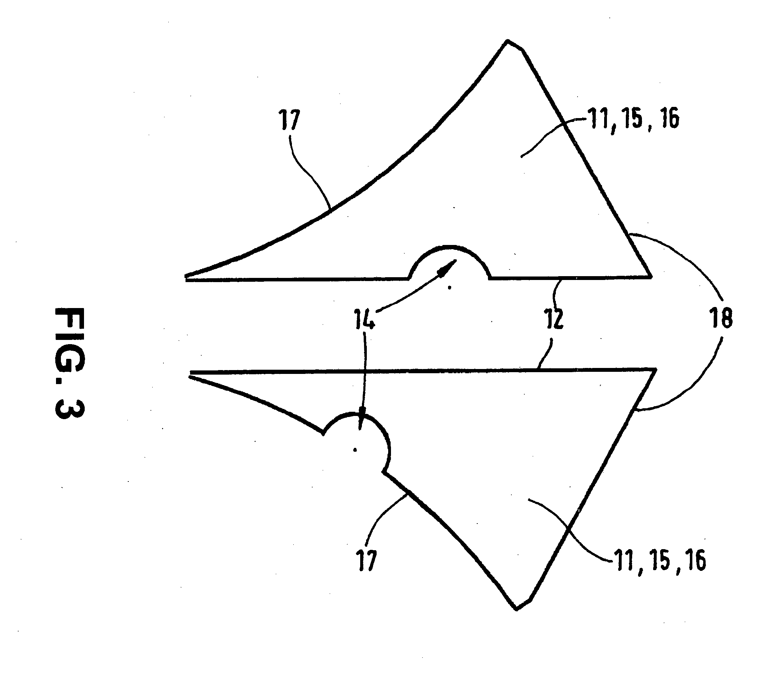

Fig. 3 zeigt in seitlicher Darstellung zwei Unterlegkeile 11; 15; 16 mit ihren Bodenflächen 12, den Rad-Stützflächen 17 sowie den Rücken 18. In die Bodenflächen 12 bzw. die Rad-Stützflächen 17 sind Aussparungen 14 eingebracht, die der zumindest bereichsweisen Aufnahme von Halterungen 10 dienen. Die beiden Unterlegkeile 11; 15; 16 liegen einander mit ihren Bodenflächen 12 gegenüber.

### Bezugszeichen:

- 1: Achse
- 2: weitere Achse
- 3: zentraler Teil
- 4: Kotflügel
- 5: vorderer Schenkel
- 6: hinterer Schenkel
- 7: Spritzlappen
- 8: Außenseite
- 9: Beleuchtungseinrichtung
- 10: Halterung
- 11: Unterlegkeil
- 12: Bodenfläche
- 13: Fahrtrichtung
- 14: Aussparung
- 15: Unterlegkeil
- 16: Unterlegkeil
- 17: Rad-Stützfläche
- 18: Rücken
- 19: Zentrum
- 20: Stauraum
- 21: Behälter
- 22: Wölbung
- 23: Öffnung
- 24: Haltebügel
- 25: Sicherungseinrichtung

## Patentansprüche

1. Kotflügel für ein Nutzfahrzeug, der mit einer der Reifenform angepassten Wölbung (22) in nach unten zur Fahrbahn gerichteten Schenkel (5; 6) endet, wobei an der Außenseite (8) der Wölbung (22) ein zur Aufnahme eines Unterlegkeils (11; 15; 16) bestimmter Stauraum (20) mit einer Öffnung (23) angeordnet ist, **dadurch gekennzeichnet, dass** der Stauraum (20) bei zwei hinter einander angeordneten Kotflügeln (4) in dem Zwischenraum zwischen den einander entgegengerichteten Wölbungen (22) der beiden Kotflügeln (4) angeordnet ist.

2. Kotflügel Anspruch 1, **dadurch gekennzeichnet, dass** der Innenraum des Stauraums (20) an den aufzunehmenden Unterlegkeil (11; 15; 16) angepasst ist.

3. Kotflügel nach Anspruch 1, **dadurch gekennzeichnet, dass** der Stauraum (20) einen anscharnierten Verschlussdeckel aufweist.

4. Kotflügel nach Anspruch 1, **dadurch gekennzeichnet, dass** eine Wandung des Stauraums (20) in den Kotflügel (4) integriert ist.

5. Kotflügel nach Anspruch 1, **dadurch gekennzeichnet, dass** der Stauraum (20) aus einem an der Außenwand des Kotflügels (4) zu befestigenden Behälter (21) besteht.

6. Kotflügel nach Anspruch 1, **dadurch gekennzeichnet, dass** der Stauraum (20) eine der Wölbung (22) des Kotflügels (4) angepasste Rückwand aufweist.

7. Kotflügel nach Anspruch 4, **dadurch gekennzeichnet, dass** der Stauraum (20) an der Vorder- und/oder Rückseite des Kotflügels (4) angeordnet ist.

8. Kotflügel nach Anspruch 1, **dadurch gekennzeichnet, dass** wenigstens eine der Wandungen des Stauraums (20) eine Rippe zum Eingriff in eine dazu kongruente Nut in einer Seite (17; 18; 12) des Unterlegkeils (11; 15; 16) aufweist.

9. Nutzfahrzeug, das wenigstens einen Kotflügel (4) nach einem oder mehreren der Ansprüche 1 bis 8 aufweist.

## Claims

1. A wing for a commercial vehicle, which, with a curvature (22) which is matched to the tyre shape, ends in limbs (5; 6) directed downwards towards the carriageway, wherein a storage space (20) which is intended for receiving a shim (11; 15; 16) and has an opening (23) is arranged on the outer side (8) of the curvature (22), **characterized in that**, when two wings (4) are arranged one behind the other, the storage space (20) is arranged in the intermediate space between the mutually oppositely directed curvatures (22) of the two wings (4).

2. The wing according to Claim 1, **characterized in that** the anterior of the storage space (20) is matched to the shim (11; 15; 16) Lo be received.

3. The wing according to Claim 1, **characterized in that** the storage space (20) has a hinged-on closure cover.

4. The wing according to Claim 1, **characterized in that** a wall of the storage space (20) is integrated in the wing (4).

5. The wing according to Claim 1, **characterized in that** the storage space (20) consists of a container (21) to be fastened to the outer wall of the wing (4).

6. The wing according to Claim 1, **characterized in that** the storage space (20) has a rear wall matched to the curvature (22) of the wing (4).

7. The wing according to Claim 4, **characterized in that** the storage space (20) is arranged on the front side and/or rear side of the wing (4).

8. The wing according to Claim 1, **characterized in that** at least one of the walls of the storage space (20) has a rib for engagement in a groove, which is congruent thereto, in one side (17; 18; 12) of the shim (11; 15; 16).

9. A commercial vehicle which has at least one wing (4) according to one or more of Claims 1 to 8.

## Revendications

1. Aile pour un véhicule utilitaire, qui se termine avec une courbure (22) adaptée à la forme du pneu dans des branches (5 ; 6) orientées vers le bas vers la chaussée, un espace de rangement (20) avec une ouverture (23) prévu pour recevoir une cale d'arrêt (11 ; 15 ; 16) étant disposé au niveau du côté extérieur (8) de la courbure (22), **caractérisée en ce que** l'espace de rangement (20) est disposé dans l'espace intermédiaire entre les courbures opposées l'une à l'autre (22) des deux ailes (4) lorsque deux ailes (4) sont disposées l'une derrière l'autre.

2. Aile selon la revendication 1, **caractérisée en ce que** l'espace intérieur de l'espace de rangement (20) est adapté à la cale d'arrêt (11 ; 15 ; 16) devant être reçue.

3. Aile selon la revendication 1, **caractérisée en ce que** l'espace de rarement (20) présente un couvercle de fermeture raccordé par une charnière.

4. Aile selon la revendication 1, **caractérisée en ce qu'**une paroi de l'espace de rangement (20) est intégrée dans l'aile (4).

5. Aile selon la revendication 1, **caractérisée en ce que** l'espace de rangement (20) se compose d'un récipient (21) devant être fixé à la paroi extérieure de l'aile (4).

6. Aile selon la revendication 1, **caractérisée en ce que** l'espace de rangement (20) présente une paroi arrière adaptée à la courbure (22) de l'aile (4).

7. Aile selon la revendication 4, **caractérisée en ce que** l'espace de rangement (20) est disposé au niveau du côté avant et/ou arrière de l'aile (4).

8. Aile selon la revendication 1, **caractérisée en ce qu'**au moins l'une des parois de l'espace de rangement (20) présente une nervure destinée à venir en prise dans une rainure correspondante dans un côté (17 ; 18 ; 12) de la cale d'arrêt (11 ; 15 ; 16).

9. Véhicule utilitaire présentant au moins une aile (4) selon l'une quelconque ou plusieurs des revendications 1 à 8.
